# EUROPEAN PATENT APPLICATION

(11) **EP 2 690 722 A1**
(43) Date of publication of application: **29.01.2014**
(21) Application number: 13177907.6
(22) Date of filing: 24.07.2013
(51) Int. Cl.: H01R 13/66, H01R 13/504, H01R 12/71, H01R 12/58

(54) **Connector**

(30) Priority: 25.07.2012 JP 2012164652
(71) Applicant: Tyco Electronics Japan G.K., Takatsu-ku Kawasaki-shi Kanagawa 213-8535 (JP)
(72) Inventor: Yamada, Shinji, Kawasaki-shi, Kanagawa 213-8535 (JP); Shimoyasu, Takashi, Kawasaki-shi, Kanagawa 213-8535 (JP); Kiyota, Kenji, Koshi City, Kumamoto 861-1116 (JP)
(74) Representative: Johnstone, Douglas Ian

(57) **Abstract**

A connector includes an electronic circuit (25). The electronic circuit (25) is connected to both of a first contact (22) and a second contact (23) directly or via another circuit device. The electronic circuit (25) also includes a photocoupler (252) which electrically insulates the first contact (22) and the second contact (23) from each other and relays a signal in an optical manner.

## Description

### BACKGROUND OF THE INVENTION

### Field of the Invention

The present invention relates to a connector to be mounted on a circuit board and mate with a mating connector.

### Description of the Related Art

There has been known a connector which is mounted on a circuit board and mates with a mating connector to connect between the mating connector outside the circuit board and an electronic circuit on the circuit board. Among such circuit boards having connectors being mounted thereon, there is one configured to once receive with a photocoupler (opto-isolator) an electric signal transmitted via a connector to a circuit board to insulate the electronic signal and transmit with the photocoupler the signal electrically insulated from the outside to a next circuit on the circuit board. By applying this configuration, possibilities of malfunctions or failures in an electronic circuit on the circuit board by noise from the outside are reduced because of being electrically isolated from the outside by the photocoupler. In addition, the electronic circuit on the circuit board may be operated with a power supply voltage different from that of the outside. However, in such configuration, the photocoupler, which does not dirctly contribute signal processing, is required to be mounted on the circuit board. For this reason, specifically in a configuration in which the number of signal lines is large, photocouplers whose count is consistent with the number of signal lines are arranged on the circuit board and thus a wide area is required on the circuit board. In such a case, an area for arrangement of electronic components serving for substantial signal processing is constrained.

Japanese Patent Publication JP 2005-191139A and Japanese Patent Publication JP 2005-268009A illustrate connectors each having a configuration in which a signal transmitted from a mating connector is processed by electronic components mounted inside and the processed signal is outputted again to the mating connector.

### SUMMARY OF THE INVENTION

In view of the foregoing, the present invention has been made to provide a connector which effectively allows an area on a circuit board available of wide and effective use for signal processing, when it is required to provide electrical insulation between an electronic circuit on the circuit board and the outside.

A connector according to the present invention includes: a housing that includes a mating section which includes a first contact to make contact with a contact of a mating connector when mating with the mating connector, and a mount section which includes a second contact to be connected to a circuit board when mounted on the circuit board and is mounted on the circuit board; and an electronic circuit that is connected to both of the first contact and the second contact directly or via another circuit device, and includes a photocoupler which electrically insulates the first contact and the second contact from each other and relays a signal in an optical manner. Alternatively, the connector according to the invention includes an electronic circuit, the electronic circuit being connected to both of a first contact and a second contact directly or via another circuit device, and the electronic circuit also including a photocoupler which electrically insulates the first contact and the second contact from each other and relays a signal in an optical manner.

The connector according to the present invention is configured to include in itself the photocoupler which transmits a signal while providing electrical insulation between the first contact and the second contact. For this reason, thanks to the connector, the electrical insulation is provided between the circuit on the circuit board and the outside. In addition, according to the connector of the present invention, it is possible to allow an area of the circuit board available for a wide and effective use, compared to a case in which a photocoupler is arranged on a circuit board.

Here, in the connector according to the present invention, it is preferable that the housing has a shape to cover the electronic circuit independently or together with the circuit board in a state in which the housing is mounted on the circuit board, and includes a ventilation opening for heat radiation to release heat generated by the electronic circuit in a direction away from the circuit board in the state in which the housing is mounted on the circuit board.

The ventilation opening is provided, and it is prevented that heat accumulates in the connector, and thus, it is possible to allow the photocoupler and other electronic components included in the connector to operate further stably.

In addition, in the connector according to the present invention, it is preferable that the housing includes a partition wall which forms both a partial area of an inner wall surface defining a space in which the electronic circuit is provided and a partial area of an outer wall surface defining an outer shape of the connector, and includes metal layers for heat radiation connected with each other by using metal which metal layers are on each of the inner wall surface and the outer wall surface, respectively.

Also, since such metal layers for heat radiation are provided, it is prevented that heat accumulates in the connector, and it is possible to allow still further stable operations.

Furthermore, in the connector according to the present invention, it is preferable that the housing includes a partition wall which forms both a partial area of an inner wall surface defining a space in which the electronic circuit is provided and a partial area of an outer wall surface defining an outer shape of the connector, and the housing is a two-color mold by first resin whose thermal conductivity is relatively low and second resin whose thermal conductivity is relatively high, and the partition wall is formed by the second resin.

The housing serves for holding the contacts while providing insulation between adjacent contacts and thus the housing is required to be an insulating element. However, insulating elements generally have low thermal conductivity. For this reason, as described above, the housing is formed by two-color molding, and the first resin having high insulation is used for a portion in which insulation is to be secured and the second resin which has high thermal conductivity while having low insulation is used for the above-described partition wall, and thereby, it is prevented that heat accumulates inside while having functions of a housing.

Here, in the connector according to the present invention, it is preferable that the photocoupler is mounted on a mount surface spreading in a direction standing up with respect to the circuit board in the state in which the connector is mounted on the circuit board.

The photocoupler is mounted on the mount surface spreading in the direction standing up with respect to the circuit board, and thus, it is possible to reduce a projected area thereof on the circuit board and thus it is possible to allow the area of the circuit board available furthermore for a wide and effective use.

As described above, according to the connector of the invention, it is possible to transmit electrical signals while providing insulation between an electronic component on a circuit board and the outside, and to make effective use of the circuit board.

BRIEF DESCRIPTION OF THE DRAWINGS
FIG. 1 is a perspective view illustrating a external appearance of a connector as an embodiment according to the present invention;
FIG. 2 is a sectional view taken along the line X-X in FIG. 1;
FIG. 3 is an exploded perspective view of the connector illustrated in FIG. 1;
FIG. 4 is a perspective view illustrating an external appearance of a connector as a second embodiment according to the present invention;
FIG. 5 is a perspective view of the connector as sectioned along the line X-X illustrated in FIG. 4;
FIG. 6 is a sectional view taken along the line X-X illustrated in FIG. 4;
FIG. 7 is an exploded perspective view of the connector as the second embodiment;
FIG. 8 is a perspective view of internal circuits included in the connector of the second embodiment;
FIG. 9 is a side view of the internal circuits included in the connector of the second embodiment;
FIG. 10 is a perspective view of a connector as a third embodiment;
FIG. 11 is a side view of the connector as the third embodiment;
FIG. 12 is a perspective view as sectioned along the line X-X in FIG. 10;
FIG. 13 is a sectional view taken along the line X-X in FIG. 10;
FIG. 14 is a perspective view of a connector as a fourth embodiment;
FIG. 15 is a sectional view taken along the line X-X in FIG. 14.
FIG. 16 is a perspective view of a housing as the fourth embodiment; and
FIG. 17 is a sectional view taken along the line X-X in FIG. 16.

### DETAILED DESCRIPTION

Embodiments of the connector of the present invention will be described in the followings.

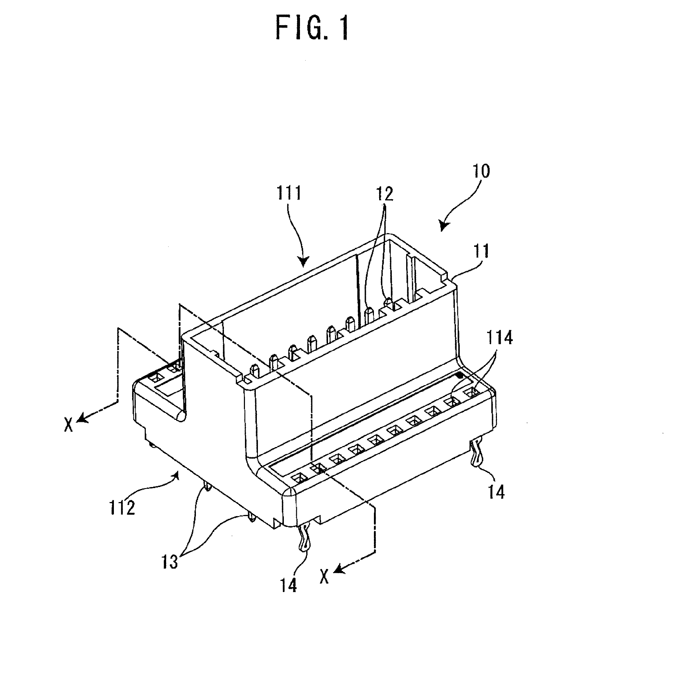

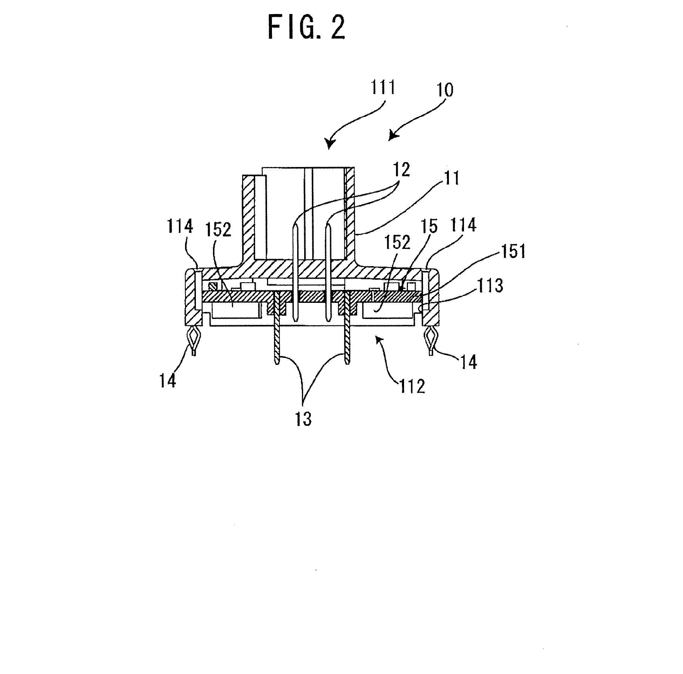

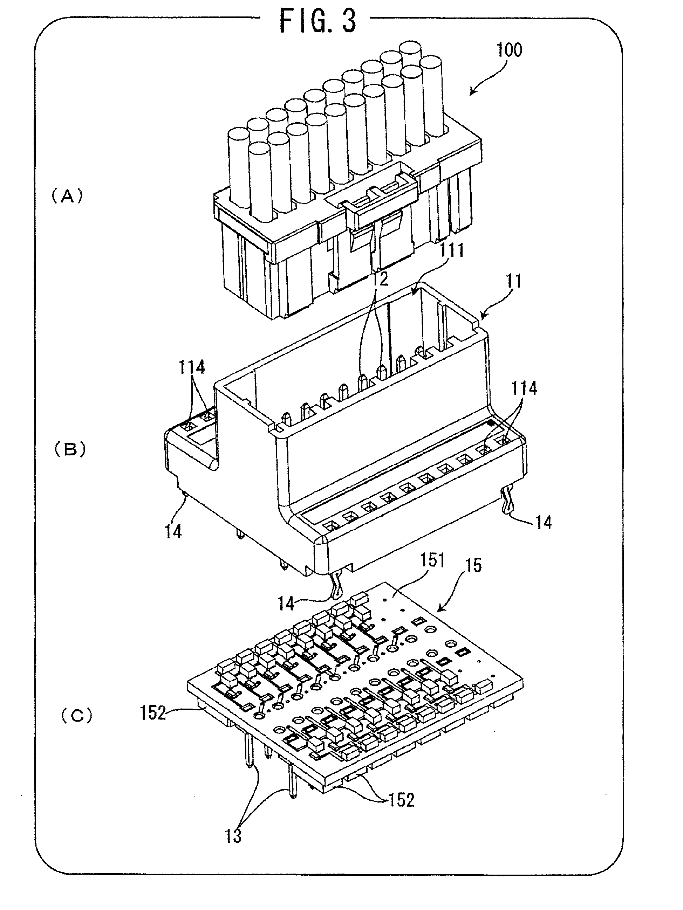

FIG. 1 is a perspective view illustrating an external appearance of a connector as an embodiment according to the present invention. In addition, FIG. 2 is a sectional view taken along the line X-X in FIG. 1. Further, FIG. 3 is an exploded perspective view of the connector illustrated in FIG. 1. However, part (A) of FIG. 3 illustrates a mating connector to mate the connector whose external appearance is illustrated in FIG. 1, and perspective views of the connector of the first embodiment are illustrated in parts (B) and (C) of FIG. 3.

A connector 10 of the first embodiment includes a housing 11, plural first contacts 12 which are arranged in two rows and plural second contacts 13 which are similarly arranged in two rows.

The housing 11 includes a mating section 111 and a mount section 112. The mating section 111 is an element of the housing 11 which mates with a mating connector 100 (see part (A) of FIG. 3). The first contacts 12 are provided in the mating section 111, and make contact with contacts (not illustrated) of the mating connector 100 when being mated with the mating connector 100. In addition, the mount section 112 is an element serving for mounting the housing 11 to a circuit board (not illustrated). The second contacts 13 are provided in the mount section 112. The second contacts 13 are passed through holes which are provided in the circuit board to penetrate from a top surface to a bottom surface, and the second contacts 13 are soldered to the circuit board on a side of the bottom surface. In addition, the mount section 112 is provided with solder pegs 14. The solder pegs 14 are passed through holes of the circuit board to be soldered so that the connector 10 is positioned and fixed to the circuit board.

In addition, as illustrated in FIG. 2, a circuit arrangement space 113 is formed on a side facing the circuit board in the housing 11. An internal circuit 15 illustrated in part (C) of FIG. 3 is arranged so as to face the circuit board in the circuit arrangement space 113. The circuit arrangement space 113 is formed in a shape such that the housing 11 forming the circuit arrangement space 113 cover the internal circuit 15 in combination with the circuit board on which the connector 10 is to be mounted. Incidentally, such a configuration may be used that a side on the mount section 112 (a bottom side) of the circuit arrangement space 113 is closed by a part of the housing such as a lid included in the housing, to cover the internal circuit 15 arranged in the circuit arrangement space 113 without depending on the circuit board.

The internal circuit 15 arranged in the circuit arrangement space 113 is a MID (Molded Interconnect Device). In other words, the internal circuit 15 is a circuit component on which terminals, wiring patterns, electrical components and the like are mounted on a resin molded body. Photocouplers 152 and other electronic components are mounted on a resin molded body 151 in the internal circuit 15. The first contacts 12 and the second contacts 13 each are connected to the resin molded body 151. The first contacts 12 and the second contacts 13 are connected directly or via other electronic components to the photocouplers 152 mounted on the resin molded body 151. The photocouplers 152 are circuit elements to electrically insulate the first contacts 12 and the second contacts 13 from each other and relay signals in an optical manner. The photocouplers 152 are provided one for each pair of the first contacts 12 and the second contacts 13.

In addition, ventilation openings 114 which communicate the circuit arrangement space 113 in which the internal circuit is arranged with the outside is formed in the housing 11. The ventilation openings 114 are ventilation holes to allow heat generated by the electronic components such as the photocouplers 152 included in the internal circuit 15 provided in the circuit arrangement space 113 to dissipate to the outside.

The ventilation openings 114 are formed such that heat in the circuit arrangement space 113 is allowed to dissipate in a direction in which the heat is cleared from the circuit board in a position in which the connector 10 is mounted on the circuit board. The connector 10 is to be mounted on a surface facing upward of the circuit board arranged horizontally while the mating section 111 being facing upward, and the ventilation openings 114 include the configuration to allow heat in the circuit arrangement space 113 to dissipate upwardly.

As described above, the connector 10 of the first embodiment is a connector having a configuration in which the connector 10 itself includes the photocouplers 152, and transmits signals while providing insulation between the first contacts 12 and the second contacts 13. For this reason, according to the connector 10 of the first embodiment, the electrical insulation is provided between the circuit board and the outside. In addition, when the connector 10 of the first embodiment is used, since photocoulers are not required to be mounted on the circuit board, it is possible to allow an area of the circuit board available of wide and effective use.

In addition, since the above-described ventilation openings 114 are formed in the housing 11 of the connector 10 as the first embodiment, it is avoided that heat accumulates in the circuit arrangement space 113 and thus it is prevented that signal transmission accuracy is deteriorated or the components are degraded due to the photocouplers 152 and the like.

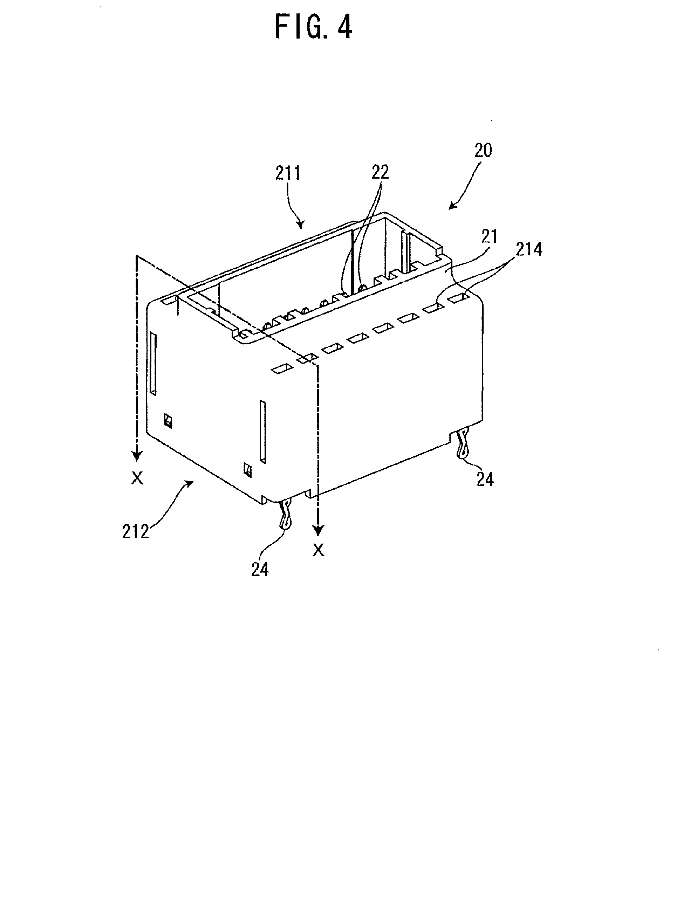

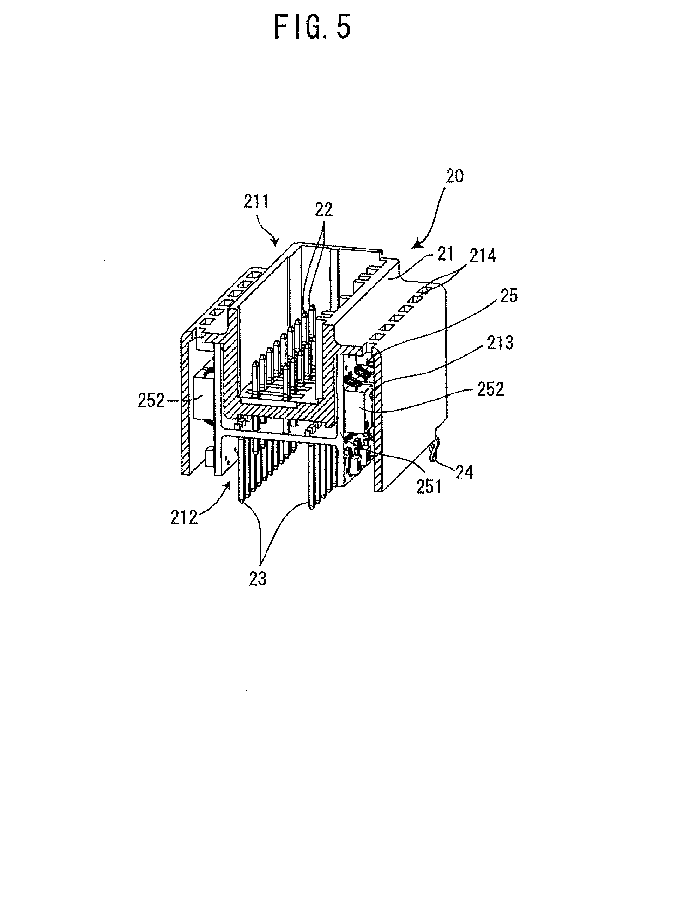

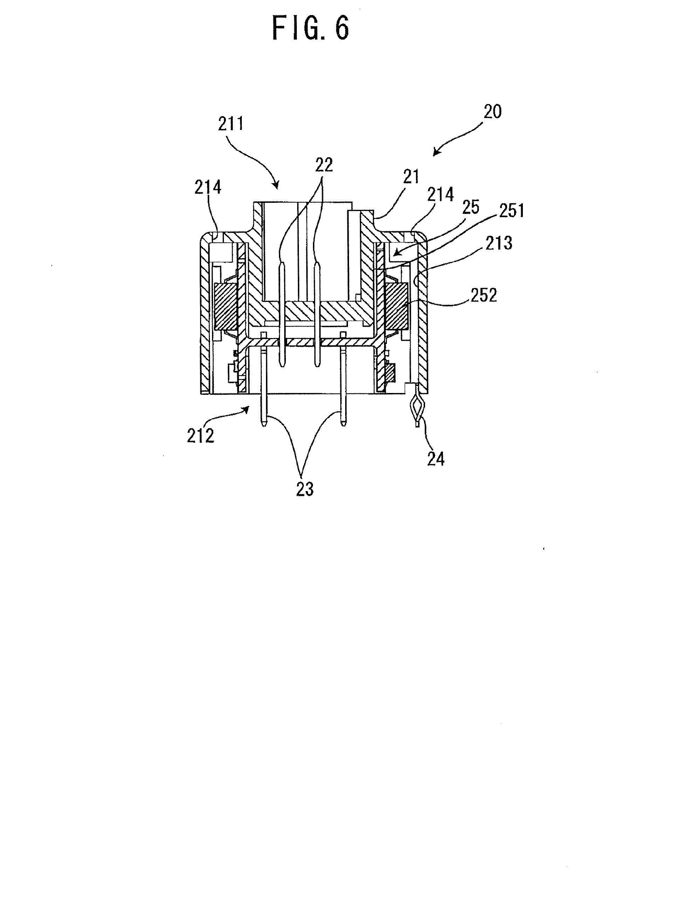

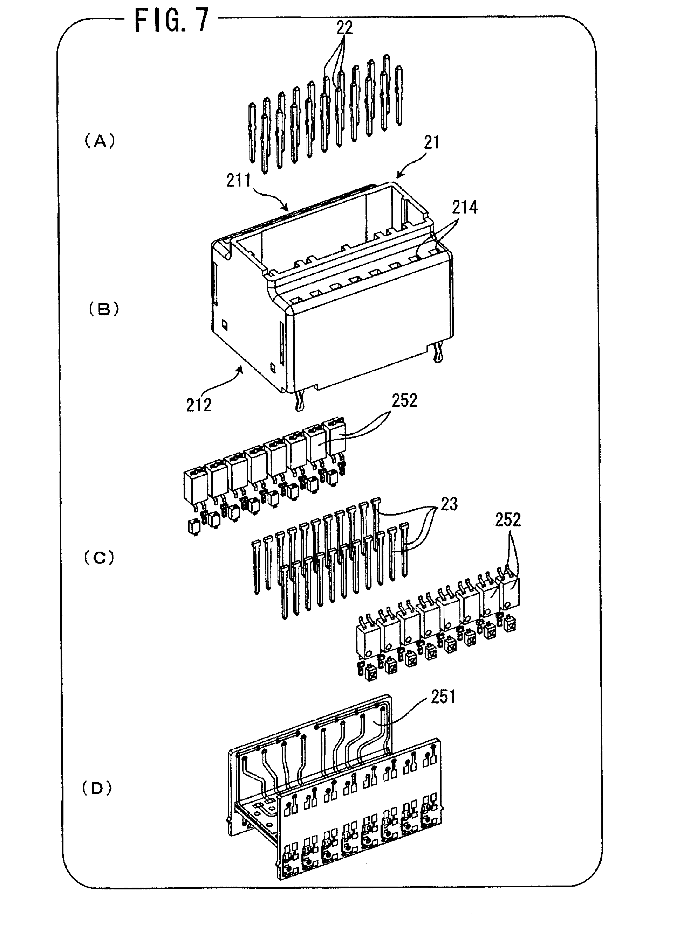

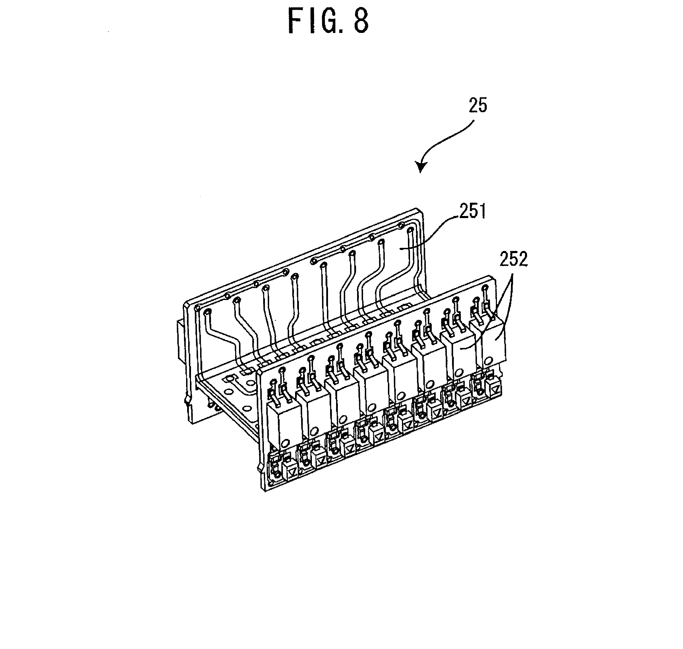

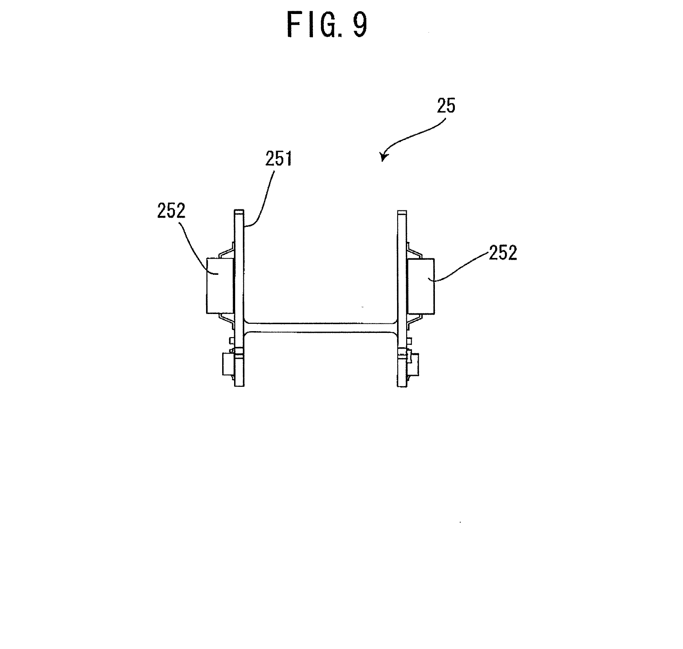

FIG. 4 is a perspective view illustrating an external appearance of a connector as a second embodiment according to the present invention. FIG. 5 is a perspective view of the connector as sectioned along the line X-X illustrated in FIG. 4. FIG. 6 is a sectional view taken along the line X-X illustrated in FIG. 4. FIG. 7 is an exploded perspective view of the connector of the second embodiment. FIG. 8 is a perspective view of internal circuits included in the connector of the second embodiment. FIG. 9 is a side view of the internal circuits included in the connector of the second embodiment.

Similar to the above-described connector 10 of the first embodiment, a connector 20 of the second embodiment includes a housing 21, plural first contacts 22 which are arranged in two rows and plural second contacts 23 which are similarly arranged in two rows.

The housing 21 includes a mating section 211 and a mount section 212. The mating section 211 has a shape same as that of the mating section 111 of the first embodiment, and is an element to mate with the mating connector 100 having the shape illustrated in part (A) of FIG. 3.

The first contacts 22 are provided in the mating section 211, and make contact with contacts of the mating connector 100 when being mated with the mating connector 100.

In addition, the mount section 212 is an element serving for mounting the housing 11 to a circuit board (not illustrated). The second contacts 23 are provided in the mount section 212, and are passed through holes which are provided in the circuit board, and are soldered to the circuit board on a side of a bottom surface thereof. In addition, also similar to the connector 10 of the first embodiment, the mount section 212 is provided with solder pegs 24. The solder pegs 24 are passed through holes of the circuit board to be soldered so that the connector 20 is fixed to the circuit board.

In addition, a circuit arrangement space 213 is formed on a side of the mount section 212 facing the circuit board in the housing 21, and an internal circuit 25 having a shape illustrated in FIGS. 8 and 9 is arranged in the circuit arrangement space 213. The circuit arrangement space 213 in which the internal circuit 25 is arranged has a configuration in which the housing 21 cover the internal circuit 25 in combination with the circuit board on which the connector 20 is mounted. However, also similar to the description of the above-described first embodiment, such a configuration may be used that the internal circuit 25 arranged in the circuit arrangement space 213 is covered without depending on the circuit board.

The internal circuit 25 arranged in the circuit arrangement space 213 is an MID, and as illustrate in FIG. 9, the photocouplers 252 and other electronic components are mounted on side surfaces of a resin molded body 251 having a sectional shape of H. The side surfaces on which the photocouplers 252 and the like are mounted of the resin molded body 251 are surfaces which spread in a direction standing up with respect to the circuit board when the connector 20 is mounted on the circuit board.

The second contacts 23 are passed through the resin molded body 251 to be fixed to the resin molded body 251, and in addition, the first contacts 22 are also passed through to be fixed to the resin molded body 251. The photocouplers 252 and other electronic components are provided one for each pair of the first contacts 22 and the second contacts 23. The first contacts 22 and the second contacts 23 are connected directly or via other electronic components to the respective photocouplers 252. The photocouplers 252 are circuit elements to electrically insulate the first contacts 22 and the second contacts 23 from each other and optically relay signals.

In addition, ventilation openings 214 open to the circuit arrangement space 213 in which the internal circuit 25 is arranged, and penetrate in an upward direction away from the circuit board. The ventilation openings 214 are ones to allow heat generated by the photocouplers 252 and the like in the internal circuit 25 to dissipate.

Similar to the above-described connector 10 of the first embodiment, the connector 20 of the second embodiment is a connector having a configuration in which the connector 20 itself includes the photocouplers 252, and transmits signals while providing electrical insulation between the first contacts 22 and the second contacts 23. Thus, according to the connector 20 of the second embodiment, since the photocouplers are not required to be mounted on the circuit board, it is possible to allow an area of the circuit board to be available for wide and effective use.

In addition, as different things from those of the connector 10 of the first embodiment, the connector 20 of the second embodiment includes the photocouplers 252 mounted on the side surface spreading in the direction standing up with respect to the circuit board. For this reason, a projected area thereof on the circuit board is reduced and thus it is possible to allow the area of the circuit board to be available further more for a wide and effective use.

In addition, similar to the connector 10 of the first embodiment for this aspect, since the ventilation openings 214 are formed in the housing 21 of the connector 20, it is avoided that heat accumulates in the circuit arrangement space 213 and thus it is prevented that signal transmission accuracy is deteriorated or components are degraded with respect to the photocouplers 252 and the like.

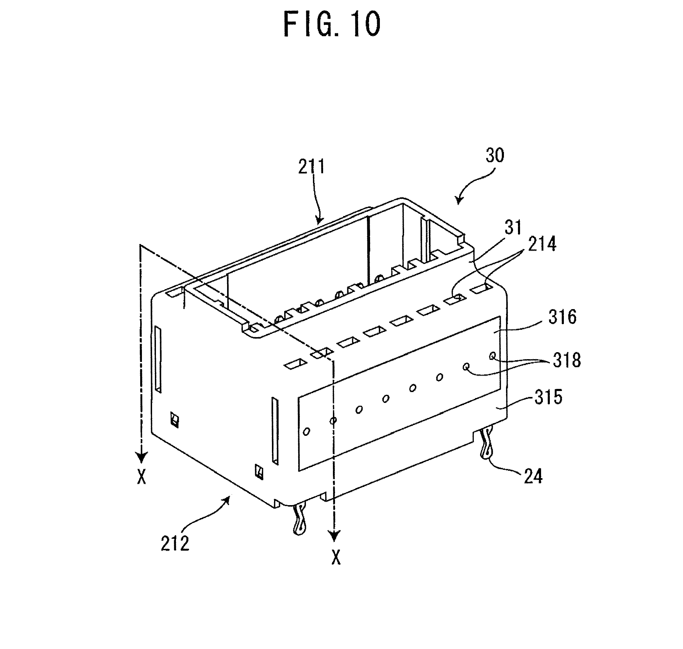

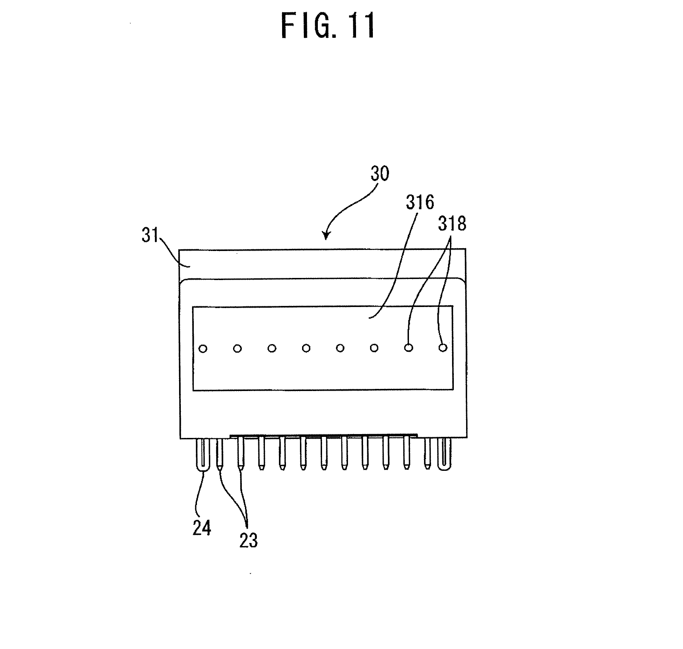

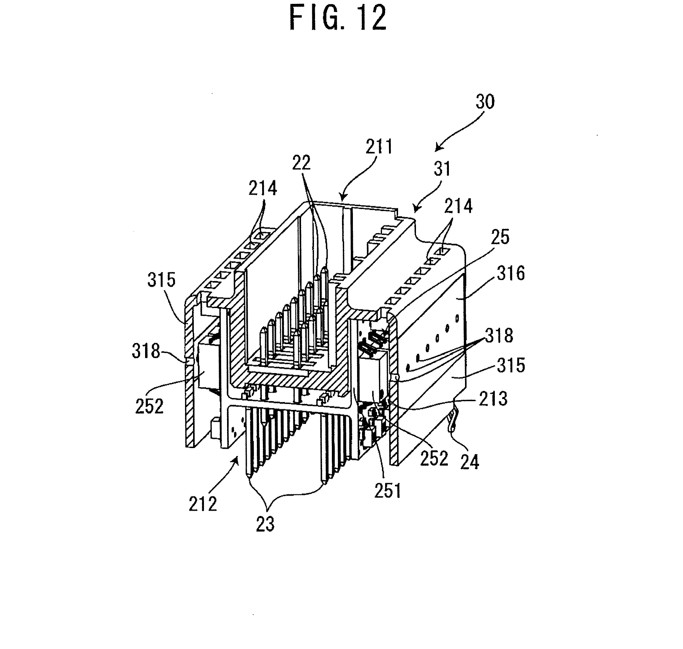

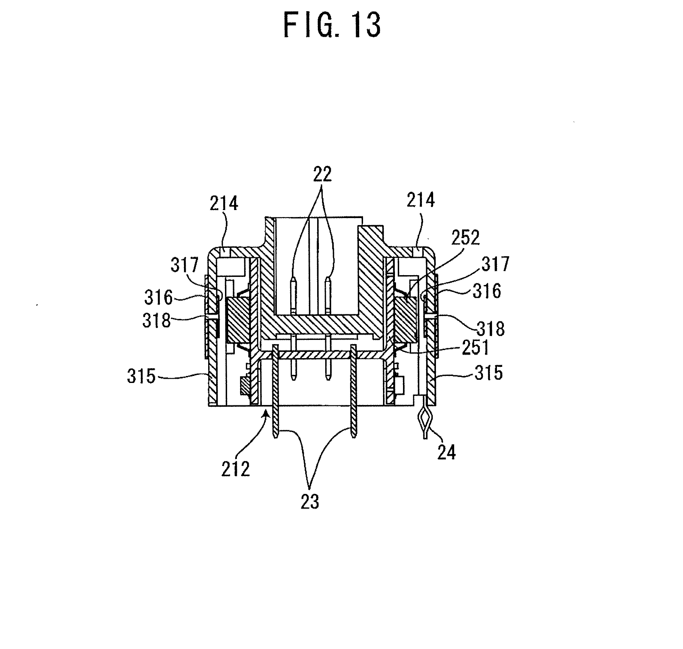

FIG. 10 is a perspective view of a connector as a third embodiment. In addition, FIG. 11 is a side view of the connector as the third embodiment. Further, FIG. 12 is a perspective view as sectioned along the line X-X in FIG. 10. FIG. 13 is a sectional view taken along the line X-X in FIG. 10.

Comparing to the above-described connector 20 of the second embodiment, a connector 30 of the third embodiment is different only in a housing 31. For this reason, elements except for the housing 31 are denoted using the same reference signs as those used for the connector 20 of the second embodiment.

In addition, for the housing 31 also, elements same as those of the above-described housing 21 of the second embodiment are denoted using the same reference signs as those used for the housing 21 of the second embodiment, and in the following, differences of the housing 31 from the housing 21 of the second embodiment will be described.

The housing 31 of the connector 30 is provided with partition walls 315 on both side surfaces thereof. The partition walls 315 form partial areas of inner wall surfaces defining the circuit arrangement space 213 in which the internal circuit 25 is arranged, and partial areas of outer surfaces defining an external appearance of the connector 30. The partition walls 315 themselves are included also in the above-described housing 21 of the second embodiment, and however, each of the partition walls 315 of the housing 31 in the third embodiment is further formed with metal layers 316, 317 for heat dissipation on an inner wall surface and an outer wall surface each thereof. The metal layers 317 spread on areas facing the photocouplers included in the internal circuit 25. In addition, the metal layers 316, 317 formed on the inner wall surface and the outer wall surface are connected with each other by metal embedded in openings 318 passing through from the inner wall surfaces to the outer wall surfaces, reepectively. The metal layers and the like are formed by the above-described MID. These metal layers 316, 317 are for conducting heat in the circuit arrangement space 213 from the metal layers 316 on the inner surface sides via the metal embedded in the openings 318 of the partition walls 315 to the metal layers 317 on the outer surface sides to dissipate the heat.

Similar to the above-described second embodiment, the third embodiment is also provided with the ventilation openings 214 for heat dissipation, and heat in the circuit arrangement space 213 is dissipated by two ways of the ventilation openings 214 and the metal layers 316, 317. Thus, the heat in the circuit arrangement space 213 is dissipated more effectively.

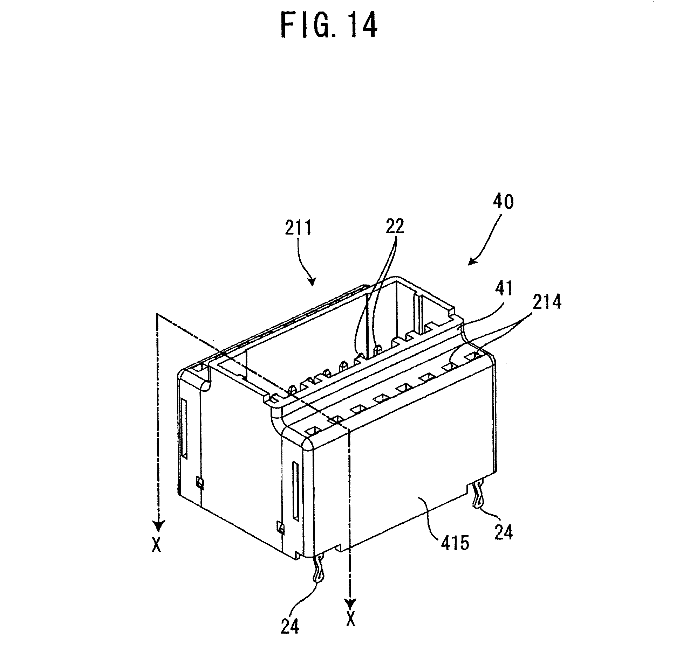

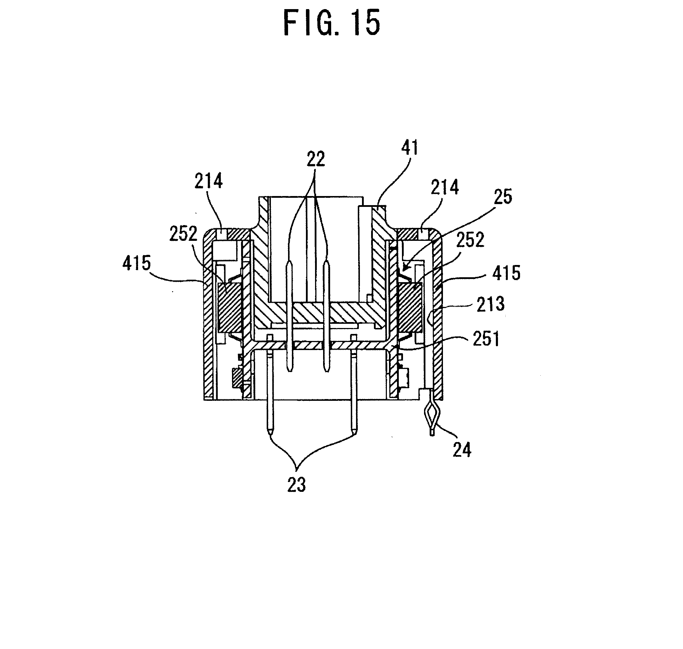

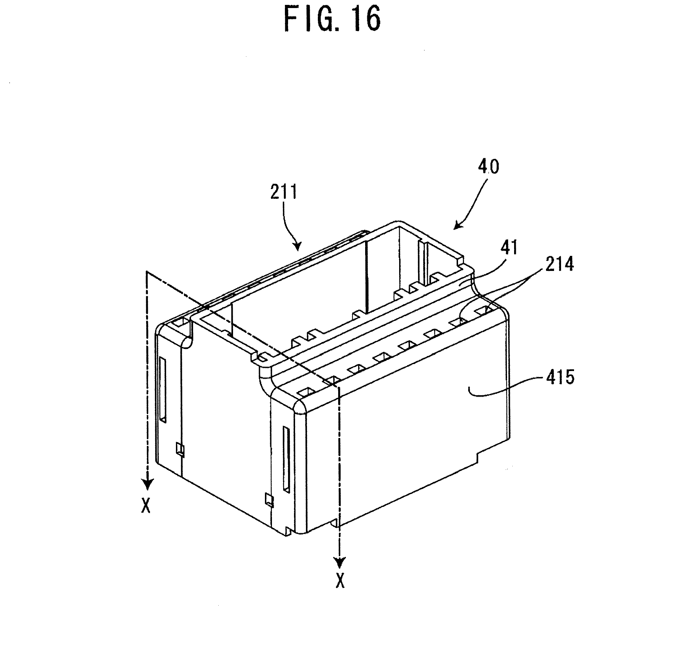

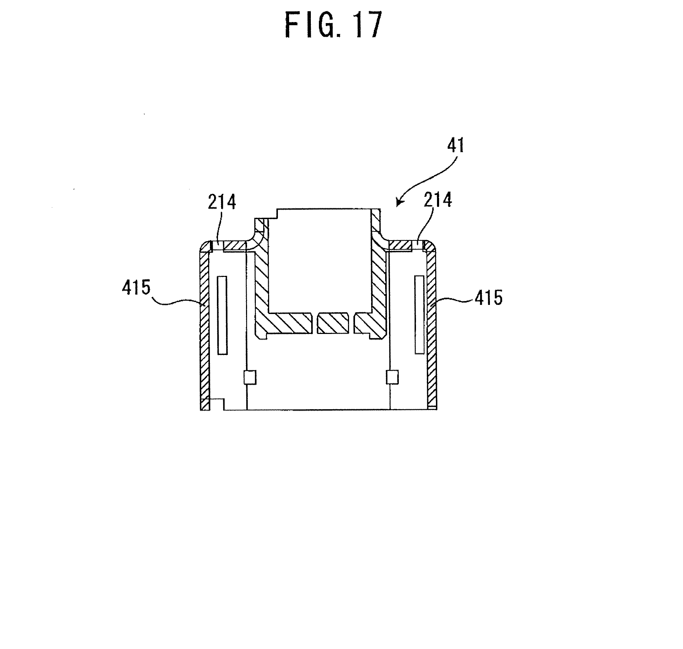

FIG. 14 is a perspective view of a connector as a fourth embodiment. In addition, FIG. 15 is a sectional view taken along the line X-X in FIG. 14. Further, FIG. 16 is a perspective view of a housing of the fourth embodiment. FIG. 17 is a sectional view taken along the line X-X in FIG. 16.

Comparing to the above-described connector 20 of the second embodiment, a connector 40 of the fourth embodiment is different only in a part of elements of a housing 41. For this reason, elements except for the different elements are denoted using the same reference signs as those used for the connector 20 of the second embodiment, and only differences from the

### second embodiment will be described.

The housing 41 of the fourth embodiment is also provided with partition walls 415 on both side surfaces thereof. The partition walls 415 form partial areas of inner wall surfaces defining the circuit arrangement space 213 in which the internal circuit 25 is arranged, and partial areas of outer surfaces defining an external appearance of the connector 40.

The housing 41 of the fourth embodiment is a two-color mold of a first resin having insulation and low thermal conductivity and a second resin having electrical conductivity and high thermal conductivity. The first resin has a thermal conductivity which is lower than the thermal conductivity of the second resin. The partition walls 415 are formed using the second resin which has the high thermal conductivity. A portion formed by using the second resin may be spread further from the partition walls 415 as far as the portion is not included in a part requiring insulation such a part that holds the first contacts 21 or the second contacts 22.

In the present embodiment, since the partition walls 415 are formed using the second resin having the high thermal conductivity, heat in the circuit arrangement space 213 is dissipated via the ventilation openings 214, and also via the partition walls 415. For this reason, the heat in the circuit arrangement space 213 is dissipated further effectively.

## Claims

1. A connector (20) comprising:
a housing (21) that includes a mating section (211) which includes a first contact (22) to make contact with a contact of a mating connector (100) when mating with the mating connector (100), and a mount section (212) which includes a second contact (23) to be connected to a circuit board when the mount section (212) is mounted on the circuit board; and
an electronic circuit (25) that is connected to both of the first contact (22) and the second contact (23), and includes a photocoupler (252) which electrically insulates the first contact (22) and the second contact (23) from each other and relays a signal in an optical manner.

2. The connector according to claim 1, wherein the electronic circuit (25) is directly connected to both of the first contact (22) and the second contact (23).

3. The connector according to claim 1, wherein the electronic circuit (25) is connected to both of the first contact (22) and the second contact (23) via another circuit device.

4. The connector according to claim 1, 2 or 3, wherein the housing (21) has a shape to cover the electronic circuit (25), and includes a ventilation opening (214) for heat radiation to release heat generated by the electronic circuit (25) in a direction away from the circuit board in the state in which the housing (21) is mounted on the circuit board.

5. The connector according to claim 4, wherein the shape of the housing (21) is arranged to cover the electronic circuit (25) independently.

6. The connector according to claim 4, wherein the shape of the housing (21) is arranged to cover the electronic circuit (25) together with the circuit board in a state in which the housing (21) is mounted on the circuit board.

7. The connector according to any preceding claim, wherein the housing (31) includes a partition wall (315) which forms both a partial area of an inner wall surface defining a space (213) in which the electronic circuit (25) is provided and a partial area of an outer wall surface defining an outer shape of the connector (30), and includes metal layers (316, 317) for heat radiation connected with each other by using metal which metal layers (316, 317) are on each of the inner wall surface and the outer wall surface, respectively.

8. The connector according to any one of claims 1 to 6, wherein
the housing (41) includes a partition wall (415) which forms both a partial area of an inner wall surface defining a space (213) in which the electronic circuit (25) is provided and a partial area of an outer wall surface defining an outer shape of the connector (40),
the housing (41) is a two-color mold comprising a first resin whose thermal conductivity is relatively low and a second resin whose thermal conductivity is relatively high, and
the partition wall (415) is formed by the second resin.

9. The connector according to any preceding claim, wherein the photocoupler (252) is mounted on a mount surface spreading in a direction standing up with respect to the circuit board in the state in which the connector (20) is mounted on the circuit board.
